# EUROPEAN PATENT APPLICATION

(11) **EP 1 418 355 A1**
(43) Date of publication of application: **12.05.2004**
(21) Application number: 03024502.1
(22) Date of filing: 24.10.2003
(51) Int. Cl.: F16D 1/09

(54) **Rigid mechanical coupling between a hollow primary low-speed shaft and an inner coaxial secondary low-speed shaft**

(30) Priority: 06.11.2002 IT BO20020701
(71) Applicant: Sassi Alberto S.p.A., 40056 Crespellano (Bologna) (IT)
(72) Inventor: Berselli, Umberto, 40017 San Giovanni In Persiceto Bologna (IT)
(74) Representative: Modiano, Guido, Dr.-Ing.

(57) **Abstract**

A rigid mechanical coupling (1) between a hollow primary low-speed shaft (2) and an inner coaxial secondary low-speed shaft (3), in which the inner shaft is coupled to the hollow shaft in two separate regions by means of the symmetrical interference of complementary cylindrical and frustum-shaped surfaces (15, 16) of the inner shaft (3), of the hollow shaft (2) and of a complementarily conical bush interposed between the end of the inner shaft (3) and the inlet of the hollow shaft (2).

## Description

The present invention relates to a rigid mechanical coupling between a hollow primary low-speed shaft and an inner coaxial secondary low-speed shaft, particularly suitable for use in a winch for elevators.

In the particular field of elevators, it is known to transmit motion from a high-speed shaft, connected directly to the motor shaft, to a low-speed shaft, which can be connected by means of a suitable pulley (or the like, for example a toothed pinion) to the traction cables (or chain) of the car, by means of a worm screw/helical gear coupling in which the components are respectively associated with the high-speed shaft and with the low-speed shaft.

As regards the low-speed shaft, in other fields of use it is known to provide a hollow shaft on which the transmission gear engaged by the worm screw is keyed, said hollow shaft being supported by means of bushings or rolling bearings by the housing of the reduction unit and simply having a cylindrical through hole in which the end user can insert any likewise cylindrical auxiliary shaft. It is evident that such a system entails the presence of suitable plays that allow the loose coupling of the inner secondary shaft with the outer primary shaft, and that transmission of the torque between the two shafts can occur only by way of the use of a tab (or key). Naturally, in current industrial use said pair operates in only one direction.

In view of the fact that in the elevator field the low-speed shaft must instead transmit power in both directions of rotation and that plays between the hollow shaft and the coaxial inner shaft and between the tabs and their seats cannot be accepted, the need arises to provide a coupling between the "secondary" low-speed shaft and the "primary" hollow shaft that has no play in any component of the coupling.

Accordingly, known systems have drawbacks in relation to the cylindrical coupling of the secondary shaft with the hollow primary shaft owing to the unavoidable presence of plays due to assembly, and therefore are unable to transmit power from one shaft to the other without using tabs.

The aim of the present invention is to obviate the drawbacks cited above, by providing a rigid and safe mechanical coupling between a hollow primary low-speed shaft and a coaxial secondary low-speed shaft that also allows to vary at will the characteristics of said secondary shaft.

It is in fact known, in the elevator field, that the pulley, and therefore the low-speed shaft portion that supports it, must be arrangeable on the right or on the left according to requirements.

This normally entails a specific assembly of the reduction unit and a substantially complete disassembly if it is necessary to reverse the orientation, with risk of damage to the main components (worm screw and ring gear, for example), great expenditure of time and obvious difficulties in terms of special equipment, fine tuning, and availability of suitable work areas.

Moreover, in the field it is known to use special low-speed shafts that have different lengths, diameters and capacities with respect to shafts used in ordinary production.

At this point it is evident that a low-speed shaft with the characteristics described above for the so-called secondary low-speed shaft (to be coupled to a uniquely defined hollow primary low-speed shaft) can allow:
to obtain the right- or left-handed orientations by mounting the secondary low-speed shaft on one side or the other,
to complete the assembly of the reduction unit and insert the secondary low-speed shaft only at the end, working simply and cheaply, even if the orientation is only known at the last moment or if the customer changes the order in progress as regards its orientation,
said clients to intervene directly in the workshop or even on the system, both in case of error in choosing the orientation and for inventory reserves,
to assemble "special" low-speed shafts, having particular characteristics that can vary in each instance, on the completely finished reduction unit,
to replace secondary low-speed shafts of ordinary production with special shafts and vice versa,
to complete every step of assembly, run-in and/or adjustment regardless of the type of secondary low-speed shaft to be assembled.

Within this aim, an object of the present invention is to provide a rigid mechanical coupling that is simple, relatively easy to provide in practice, safe in use, effective in operation and has a relatively low cost.

This aim and this and other objects that will become better apparent hereinafter are achieved by the present rigid mechanical coupling between a hollow primary low-speed shaft and an inner coaxial secondary low-speed shaft, characterized in that the inner shaft is coupled to the hollow shaft in two separate regions by means of the symmetrical interference of complementary cylindrical and frustum-shaped surfaces of the inner shaft, of the hollow shaft and of a complementarily conical bush interposed between the end of the inner shaft and the inlet of the hollow shaft.

Further characteristics and advantages of the invention will become better apparent from the following detailed description of a preferred but not exclusive embodiment of a rigid mechanical coupling between a hollow primary low-speed shaft and a coaxial inner secondary low-speed shaft according to the invention, illustrated by way of non-limitative example in the accompanying drawings, wherein:
Figure 1 is a sectional perspective view, taken along a diametrical plane, of an elevator winch equipped with a rigid coupling according to the invention provided with a hollow primary low-speed shaft supported by means of sleeve bearings;
Figure 2 is a sectional perspective view, taken along a diametrical plane, of a winch equipped like the winch of Figure 1 with a hollow primary low-speed shaft supported by rolling bearings.

With particular reference to the figures, a rigid mechanical coupling between a hollow primary low-speed shaft 2 and a coaxial inner secondary low-speed shaft 3, is generally designated by the reference numeral 1 and is shown in thick lines in the drawings; the other components that normally constitute an elevator winch having any characteristics and dimensions, to which the device according to the invention is applied, are instead shown by way of example in thin lines.

The winch comprises a body 4 with fixing holes having an outline 5, to which a motor unit 6 is associated; a high-speed shaft 8 protrudes from the motor unit and has a worm screw 9 keyed thereto; such worm screw meshes with a gear 10, which is keyed on an appropriately provided hub 11; the hub is inserted with an interference fit (by way of a longitudinal tongue 12 inserted in corresponding recesses) into the outer surface of the hollow primary low-speed shaft 2.

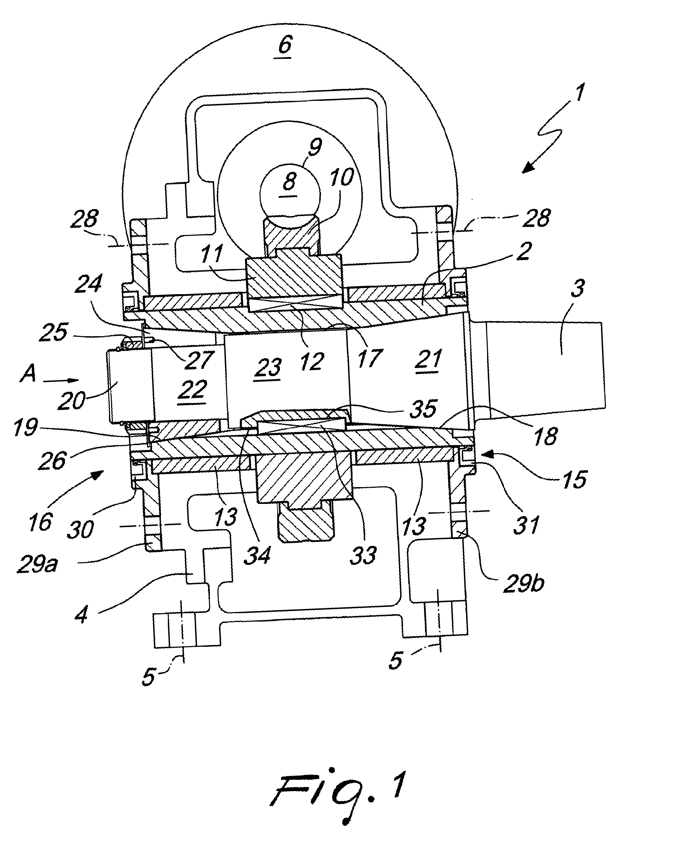

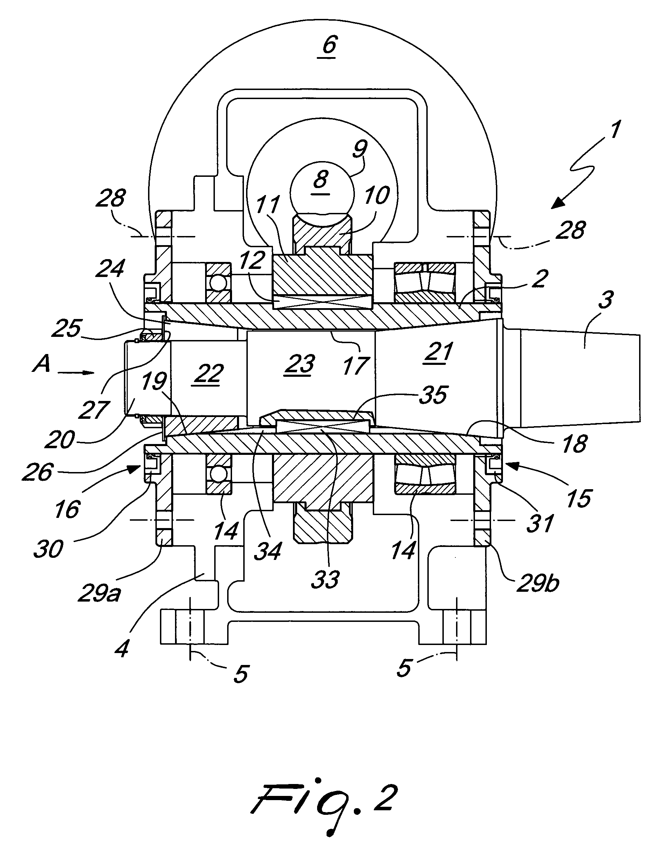

The hollow shaft 2 is mounted so that it can rotate hermetically in the footing 4 by means of a pair of sleeve bearings 13 (Figure 1) or by way of rolling bearings that can be equally of the ball or roller type 14 (Figure 2).

The inner secondary low-speed shaft 3 is coupled to the hollow primary low-speed shaft 2 in two separate regions 15 and 16 by symmetrical interference of complementary cylindrical and frustum-shaped surfaces of the inner shaft, of the hollow shaft and of a complementarily conical bush described hereafter.

The coupling consists of the fact that the cylindrical cavity 17 of the central part of the primary hollow shaft has, at its two ends, respective mutually opposite end seats 18 and 19 that are frustum-shaped and diverge toward the outside of the hollow shaft.

The inner shaft 3 has a threaded end 20 and, at a certain distance from said end, a frustum-shaped portion 21 that converges toward the threaded end 20 and is designed to couple in a known manner in one of the ends of the hollow shaft (18 or 19), while adjacent to the threaded portion 20 there is a cylindrical shaft portion 22 that has a reduced diameter with respect to the diameter of the central part 23.

A complementarily conical bush 24 rests on the shaft portion 22 and can slide longitudinally; such bush is deformable and is provided externally with a frustum-like shape, which, when the ring 25 is screwed tighter, is pressed in the direction A of insertion in the hollow shaft symmetrically with respect to the traction of the frustum-shaped portion 21 of the inner shaft in the corresponding seat 18.

The complementarily conical deformable bush 24 can be provided in two or more identical sectors that allow to distribute the load in a perfectly radial manner over the entire frustum-shaped surface 19 and cylindrical surface 22.

As an alternative, the deformable bush 24 can be monolithic, with at least one longitudinal slit that allows its deformation in the direction for fastening onto the surface of the inner shaft 22.

An annular element 26 is provided between the ring 25 and the deformable bush 24 for correct distribution of the load over the entire surface of the bush; the bush also has at least one pair of threaded opposite holes 27 for coupling to an extractor that can facilitate disassembly operations.

Two side members 29a, 29b are fixed on the two sides of the footing by means of screws in holes that have the guiding line 28; respective annular seats are provided in the side members for lip-type sealing gaskets 30, 31 that act on the ends of the outer surface of the hollow shaft.

Advantageously, the hollow shaft and the inner shaft are coupled also by a safety tab 33, which is fitted at two seats 34 and 35 formed respectively in the hollow primary shaft and in the secondary shaft and does not transmit power but is used only, as mentioned, for safety.

The operation of the invention is intuitive:
after assembling the various components, the ring 25 is tightened onto the threaded end 20, and while the frustum-shaped surface 21 mates with the frustum-shaped surface of an end of the hollow primary low-speed shaft 18, the bush 24 tightens against the frustum-shaped surface 19 of the other end of the primary shaft in a symmetrical fashion, likewise locking the cylindrical surfaces of 24 and 22.

It has thus been shown that the invention achieves the intended aim and object, and in particular that torque is transmitted to the secondary low-speed shaft by friction of conical and cylindrical couplings located in two separate regions.

The coupling between the hollow primary low-speed shaft and the inner secondary low-speed shaft is provided by drawing the secondary low-speed shaft against the primary hollow shaft: this traction is produced by means of the threaded ring that is screwed onto the threaded end of the secondary low-speed shaft.

The supporting surface of the ring abuts against the complementarily conical bush, which is provided at its center with a cylindrical through hole, in which the part of the secondary low-speed shaft that precedes the thread is inserted, while on the outside it is shaped like a frustum and engages the other conical cavity of the primary low-speed shaft, which is symmetrical with respect to the first cavity.

The complementarily conical bush must be adequately flexible, in order to undergo deformation as a consequence of the compression produced on the outer conical surface: this provides a friction coupling between all the frustum-shaped surfaces and also the cylindrical surfaces of the primary and secondary shafts and the bush.

The coupling according to the invention can be sized so as to transmit all the necessary torque by friction, eliminating any impacts upon motion reversal, and can also provide for a coupling between the primary shaft and the secondary shaft and the longitudinal tab inserted in respective facing seats, although the tab usually has a purely safety-related function.

The invention thus conceived is susceptible of numerous modifications and variations, all of which are within the scope of the appended claims.

All the details may further be replaced with other technically equivalent ones.

In the embodiments cited above, individual characteristics, given in relation to specific examples, may actually be interchanged with other different characteristics that exist in other embodiments.

In practice, the materials used, as well as the shapes and the dimensions, may be any according to requirements without thereby abandoning the scope of the protection of the appended claims.

The disclosures in Italian Patent Application No. BO2002A000701 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A rigid mechanical coupling (1) between a hollow primary low-speed shaft (2) and an inner coaxial secondary low-speed shaft (3), **characterized in that** the inner shaft is coupled to the hollow shaft in two separate regions by means of the symmetrical interference of complementary cylindrical and frustum-shaped surfaces (15, 16) of the inner shaft (3), of the hollow shaft (2) and of a complementarily conical bush (24) interposed between the end of the inner shaft (3) and the inlet of the hollow shaft (2).

2. The coupling according to claim 1, **characterized in that** the cavity of said primary shaft has, at its two ends, respective opposite frustum-shaped end seats that diverge toward the outside of said shaft, **in that** said secondary inner shaft has a threaded end (20) and, at a distance from said end, a frustum-shaped portion (21) that converges toward said threaded end and is adapted to couple in a known manner in one of said ends of the primary hollow shaft (18 or 19), whilst adjacent to the threaded portion there is a cylindrical shaft portion (22) that has a reduced diameter and on which said bush (24) can rest so that it can slide longitudinally, said bush (24) having a cylindrical hole and a complementarily conical outer surface that is adapted, when the ring (25) is screwed tighter, to be pressed in the direction (A) for insertion in the hollow shaft symmetrically with respect to the traction of the frustum-shaped portion of the inner shaft in the corresponding seat, while the cylindrical hole of the bush tightens onto the reduced-diameter portion of the secondary shaft.

3. The coupling according to one or more of the preceding claims, **characterized in that** said complementarily conical bush (24) is deformable in a radial direction and is formed by at least two sectors.

4. The coupling according to one or more of the preceding claims, **characterized in that** said complementarily conical bush (24) is deformable and monolithic and has at least one longitudinal slit that allows its deformation in the direction for fastening onto the surface of the inner shaft.

5. The coupling according to one or more of the preceding claims, **characterized in that** said complementarily conical bush (24) is monolithic and is made of a material that is adapted, by way of its inherent characteristic, to allow deformation in the direction for fastening onto the surface of the inner shaft.
